# FASCICULE DE BREVET EUROPEEN

(11) **EP 0 709 241 B1**
(45) Date de publication et mention de la délivrance du brevet: **02.12.1998**
(21) Numéro de dépôt: 95116682.6
(22) Date de dépôt: 23.10.1995
(51) Int. Cl.: B60H 1/00

(54) **Dispositif de chauffage et/ou d'aération pour l'habitacle d'un véhicule automobile**
Heizungs- und/oder Belüftungsanlage eines Fahrzeuginnenraumes
Device for heating and/or ventilating a vehicle interior

(30) Priorité: 28.10.1994 FR 9413000
(43) Date de publication de la demande: 01.05.1996
(73) Titulaire: VALEO CLIMATISATION, 78320 Le Mesnil Saint-Denis (FR)
(72) Inventeur: Danieau, Jacques, F-78590 Noisy le Roi (FR)
(74) Mandataire: Gamonal, Didier

(56) Documents cités:
- FR-A- 1 359 909
- FR-A- 2 159 138
- GB-A- 1 131 460
- US-A- 4 842 047

## Description

L'invention concerne un dispositif pour le chauffage et/ou l'aération de l'habitacle d'un véhicule automobile.

D'après la Demande de brevet français No 94 06707 (FR-A-2 720 693) du 1er juin 1994 au nom de la Demanderesse, un dispositif de ce genre comprend :
- un boîtier de chauffage-distribution délimité par une paroi périphérique présentant une portion cylindrique circulaire autour d'un axe de révolution,
- une entrée d'air aménagée dans le boîtier de chauffage-distribution,
- des sorties d'air aménagées dans le boîtier et formées au moins en partie dans la portion cylindrique circulaire,
- un radiateur logé dans le boîtier, et
- un volet de répartition monté pivotant dans le boîtier par rapport à l'axe de révolution, suivant un débattement angulaire limité, et comprenant des cloisons cylindriques circulaires propres à coopérer avec la portion cylindrique circulaire du boîtier pour contrôler sélectivement les sorties d'air en fonction de la position angulaire du volet de répartition.

Dans ce dispositif, le volet de répartition comprend en outre au moins une cloison de répartition propre à répartir un flux d'air froid venant de l'entrée d'air entre un flux froid parvenant directement à au moins une sortie d'air et un flux chaud parvenant à au moins une sortie d'air après avoir traversé le radiateur.

Ce dispositif comprend ainsi un boîtier de chauffage-distribution muni d'un seul volet de répartition, de forme spécifique, qui assure à la fois la commande de distribution de l'air au travers des différentes sorties d'air du boîtier, le degré ou pourcentage de chauffage en modifiant la proportion entre le flux froid et le flux chaud, ainsi que le débit d'air en obturant plus ou moins les sorties d'air du boîtier.

On obtient ainsi un dispositif qui peut être réalisé sous une forme particulièrement compacte, donc peu encombrante, et qui peut être actionné par une seule commande au niveau du tableau de bord.

Il en résulte que ce dispositif trouve une application particulière aux véhicules de petites dimensions, et en particulier aux véhicules à vocation urbaine.

Il est à noter toutefois que, dans ce dispositif, il n'était pas prévu de moyens spécifiques pour alimenter le boîtier de chauffage-distribution avec de l'air extérieur et/ou de l'air recirculé.

L'invention a donc pour but de perfectionner ce dispositif en prévoyant des moyens spécifiques pour alimenter le boîtier de chauffage-distribution avec de l'air extérieur et/ou de l'air recirculé, et cela sans porter atteinte à la compacité du dispositif.

L'invention propose à cet effet un dispositif de chauffage et/ou d'aération du type défini en introduction, lequel comprend en outre au moins un boîtier d'alimentation disposé à une extrémité axiale du boîtier de chauffage-distribution et comprenant une entrée pour de l'air extérieur provenant de l'extérieur de l'habitacle, une entrée pour de l'air recirculé provenant de l'intérieur de l'habitacle, un volet de mélange synchronisé avec le volet de répartition et propre à régler la proportion entre l'air extérieur et l'air recirculé admis dans le boîtier d'alimentation pour fournir de l'air mélangé, ainsi qu'une sortie d'air pour cet air mélangé, cette sortie d'air mélangé du boitier d'alimentation étant reliée à un pulseur d'air alimentant l'entrée d'air du boîtier de chauffage-distribution.

Ainsi, on peut alimenter le boîtier de chauffage-distribution avec de l'air extérieur et/ou de l'air recirculé par l'intermédiaire d'au moins un boîtier d'alimentation disposé dans le prolongement axial du boîtier de chauffage-distribution et comprenant un volet de mélange synchronisé au volet de répartition du boîtier de chauffage-distribution.

Il en résulte que le dispositif de l'invention peut fonctionner avec une commande unique, comme c'était déjà le cas du dispositif de la Demande de brevet français précitée.

Il conserve en outre des caractéristiques de compacité, étant donné que le ou chaque boîtier d'alimentation peut occuper un faible volume et qu'il est de surcroît situé dans le prolongement axial du boîtier de chauffage-distribution.

Dans une forme de réalisation préférée de l'invention, le volet de mélange du boîtier d'alimentation et le volet de répartition du boîtier de chauffage-distribution sont calés sur un arbre commun dans la direction de l'axe de révolution.

De façon préférentielle, le boîtier d'alimentation comporte deux flasques latéraux entre lesquels se débat le volet de mélange, ce dernier ayant une forme générale rectangulaire et s'étendant en drapeau à partir de son axe de pivotement.

De façon avantageuse, l'entrée d'air extérieure, l'entrée d'air recirculé et la sortie d'air mélangé s'étendent dans des directions radiales par rapport à l'axe de pivotement du volet de mélange.

Dans une forme de réalisation préférée de l'invention, l'entrée d'air extérieur et l'entrée d'air recirculé s'étendent dans des directions faisant entre elles un angle voisin de 90°C et le volet de mélange possède un débattement angulaire sensiblement de la même valeur.

Selon une autre caractéristique de l'invention, le volet de mélange est propre à pivoter dans le boîtier d'alimentation entre une première position extrême dans laquelle il obture l'entrée d'air recirculé et une seconde position extrême dans laquelle il obture l'entrée d'air extérieur, et à prendre des positions intermédiaires choisies, dans chacune desquelles il établit une proportion choisie entre l'air extérieur et l'air recirculé admis dans le boîtier d'alimentation.

Dans le dispositif de la Demande de brevet français précitée, le volet de répartition est réglable et peut prendre les positions suivantes : position de blocage (P1), position de dégivrage (P2), position de dégivrage-pieds (P3), position pieds (P4), position aération-pieds (P5) et position aération (P6).

Conformément à l'invention, le volet de mélange du boîtier d'alimentation est propre à prendre les mêmes positions P1 à P6.

Avantageusement, il est prévu que, de la position de blocage à la position de dégivrage, le volet de mélange obture l'entrée d'air recirculé en ouvrant complètement l'entrée d'air extérieur et que, de la position de dégivrage à la position d'aération, le volet de mélange assure le mélange entre l'air extérieur et l'air recirculé en augmentant progressivement le débit d'air recirculé au détriment du débit d'air extérieur, jusqu'à obturer complètement l'entrée d'air extérieur dans la position d'aération.

Selon une autre caractéristique de l'invention, le dispositif comprend une commande unique pour régler la position du volet de répartition du boîtier de chauffage-distribution et le volet de mélange du boîtier d'alimentation.

Avantageusement, le dispositif peut comprendre en outre un circuit d'air climatisé ayant un évaporateur logé entre le pulseur et le boîtier de chauffage-distribution.

Selon une autre caractéristique de l'invention, le circuit d'air climatisé comprend une commande séparée, indépendante de la commande du volet de répartition du boîtier de chauffage-distribution et du volet de mélange du boîtier de distribution, la commande du circuit d'air climatisé étant inhibée dans la position où le volet de mélange du boitier d'alimentation obture l'entrée d'air recirculé.

Dans une forme de réalisation préférée de l'invention, le dispositif comprend deux boîtiers d'alimentation disposés respectivement aux deux extrémités axiales du boîtier de chauffage-distribution et reliés respectivement à deux entrées d'air opposées faisant partie du pulseur.

Dans la description qui suit, faite à titre d'exemple, on se réfère aux dessins annexés, sur lesquels :
- la figure 1 est une vue en perspective d'un dispositif selon l'invention qui comprend deux boîtiers d'alimentation de part et d'autre du boîtier de chauffage-distribution;
- la figure 2 est une vue en perspective du boîtier de chauffage-distribution du dispositif de la figure 1;
- la figure 3 est une vue en perspective du volet de répartition monté dans le boîtier de chauffage-distribution et des deux volets de mélange montés dans les deux boîtiers d'alimentation;
- la figure 4 est une vue en coupe au niveau de la partie centrale du boîtier de chauffage-distribution de la figure 1;
- la figure 5 est une vue en coupe au niveau d'une partie latérale du volet de la figure 3;
- la figure 6 est une vue en coupe au niveau d'une partie centrale du volet de la figure 3;
- la figure 7 représente schématiquement un bouton de commande à six positions différentes pour le dispositif de l'invention;
- la figure 8 est une vue en perspective d'un boîtier d'alimentation du dispositif de la figure 1;
- la figure 9 est une vue en coupe transversale du boîtier d'alimentation;
- les figures 10A et 10B représentent des vues en coupe transversale du dispositif respectivement au niveau d'un boîtier d'alimentation et au niveau du boîtier de chauffage-distribution, pour une première position P1 du dispositif; et
- les figures 11A et 11B, les figures 12a et 12B, les figures 13A et 13B, les figures 14A et 14B, et les figures 15A et 15B, sont des vues analogues respectivement pour cinq autres positions P2, P3, P4, P5 et P6.

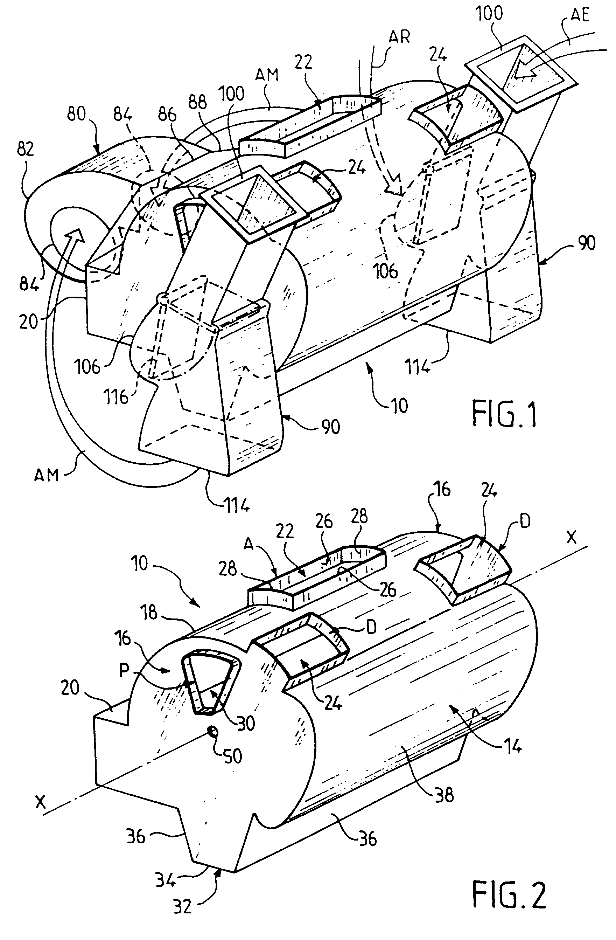

Le dispositif représenté à la figure 1 comprend un boîtier de chauffage-distribution 10, deux boîtiers d'alimentation 90 encadrant le boîtier 10 à ses deux extrémités et un pulseur d'air 80 couplé au boîtier 10.

Le boîtier de chauffage-distribution 10 possède une structure généralement identique à celle du boîtier selon la Demande de brevet français précitée. La structure de ce boîtier sera expliquée maintenant en référence aux figures 2 à 6.

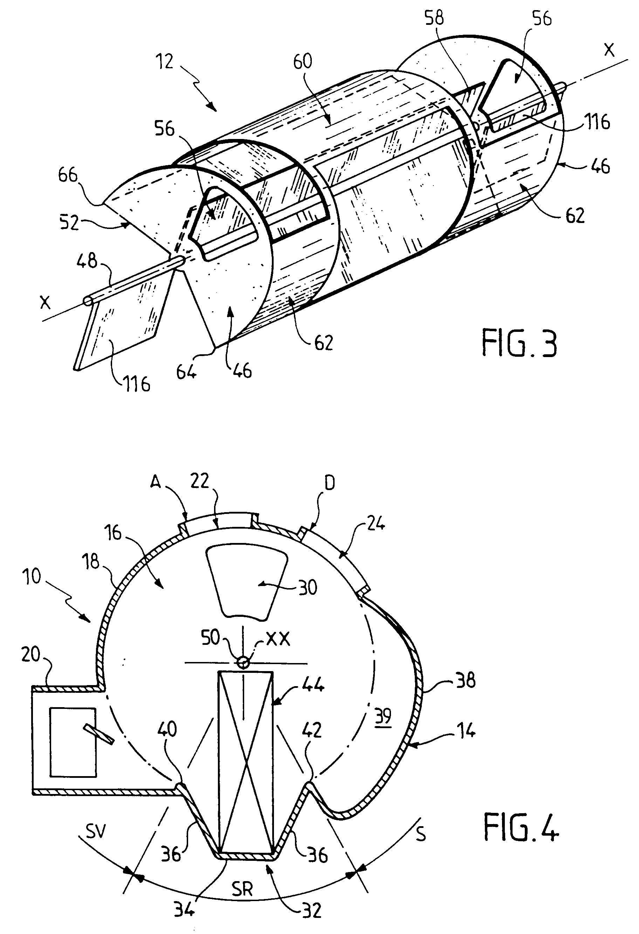

A l'intérieur du boîtier 10 (figures 2 et 4) est monté un volet de répartition 12 (figures 3, 5 et 6) qui pivote suivant un axe XX avec un débattement angulaire limité.

Le boîtier 10 est délimité par une paroi périphérique 14 ayant des génératrices sensiblement parallèles à l'axe XX et par deux flasques d'extrémité 16 généralement perpendiculaires à l'axe XX.

La paroi périphérique 14 comporte une portion cylindrique circulaire 18 de révolution autour de l'axe XX qui s'étend sur plus de 180°. A cette portion cylindrique 18 se rattache une entrée d'air 20 réalisée sous la forme d'une tubulure de section générale rectangulaire qui s'étend sur toute la longueur axiale du boîtier 10 et qui communique avec l'intérieur du boîtier dans une direction non radiale par rapport à l'axe XX. L'entrée d'air 20 est propre à être alimentée par un flux d'air ou recirculé, au moyen du pulseur 80 (figure 1).

Une sortie d'air centrale 22 est aménagée dans une zone médiane de la portion cylindrique 18, tandis que deux sorties d'air latérales 24 sont aménagées dans deux zones latérales de la portion cylindrique 18, situées respectivement adjacentes aux deux flasques d'extrémité 16.

L'entrée d'air 20 et les deux sorties d'air 24 sont respectivement situées aux extrémités de l'étendue angulaire de la portion cylindrique 18, tandis que la sortie d'air centrale 22 est située sensiblement au milieu de cette étendue angulaire.

Comme montré à la figure 2, la sortie d'air centrale 22 est limitée par deux côtés 26 parallèles à l'axe XX et par deux côtés 28 en arc de cercle. Il en est de même des sorties d'air latérales 24.

Les deux flasques d'extrémité sont munis chacun d'une sortie d'air d'extrémité 30 qui affecte la forme générale d'un secteur angulaire, chaque sortie 30 étant disposée dans une région du flasque 16 qui est proche de la sortie d'air 24 adjacente.

Dans l'exemple, la sortie d'air centrale 22 est propre à alimenter un conduit d'aération A menant à des aérateurs de planche de bord (non représentés), les deux sorties d'air latérales 24 sont propres à alimenter chacune un conduit de dégivrage D menant à des buses de dégivrage/désembuage (non représentées), tandis que les deux sorties d'air d'extrémité 30 sont propres à alimenter chacune un conduit pied P menant à des buses (non représentées) situées à la partie inférieure de l'habitacle du véhicule.

La paroi périphérique 14 du boîtier comporte en outre, à partir de l'entrée d'air 20, un fond 32 ayant une paroi inférieure 34 et deux parois latérales 36 en V puis une paroi 38 en saillie vers l'intérieur qui délimite intérieurement une chambre périphérique 39 (figure 4) destinée à recevoir de l'air chaud, comme on le verra plus loin.

Les deux parois 36 se raccordent respectivement à l'entrée 20 et à la paroi 38 le long de deux becs longitudinaux 40 et 42 tous deux parallèles à l'axe XX, le bec 40 étant situé du côté de l'entrée 20 et le bec 42 du côté opposé (figure 4).

A l'intérieur du boîtier 10 est logé un radiateur de chauffage 44 qui peut être du type électrique ou du type parcouru par un fluide chaud. Ce radiateur est logé dans la direction de l'axe XX et occupe un secteur angulaire limité SR (figure 4) du boîtier, compris entre l'axe XX et le fond 32 (parois 34 et 36). Le secteur angulaire SR est de l'ordre de 60°, si bien qu'il subsiste un secteur complémentaire SV (figure 4) de l'ordre de 300° pour le débattement angulaire du volet 12, comme on le verra plus loin.

Le volet de répartition 12 (figures 3, 5 et 6) comprend deux flans latéraux 46 ayant chacun la forme d'un secteur circulaire s'étendant sur un peu plus de 180° et comprenant un arbre 48 d'axe XX propre à coopérer avec un logement 50 d'un flasque d'extrémité 16 du boîtier (figure 2), en vue du mouvement pivotant du volet à l'intérieur du boîtier.

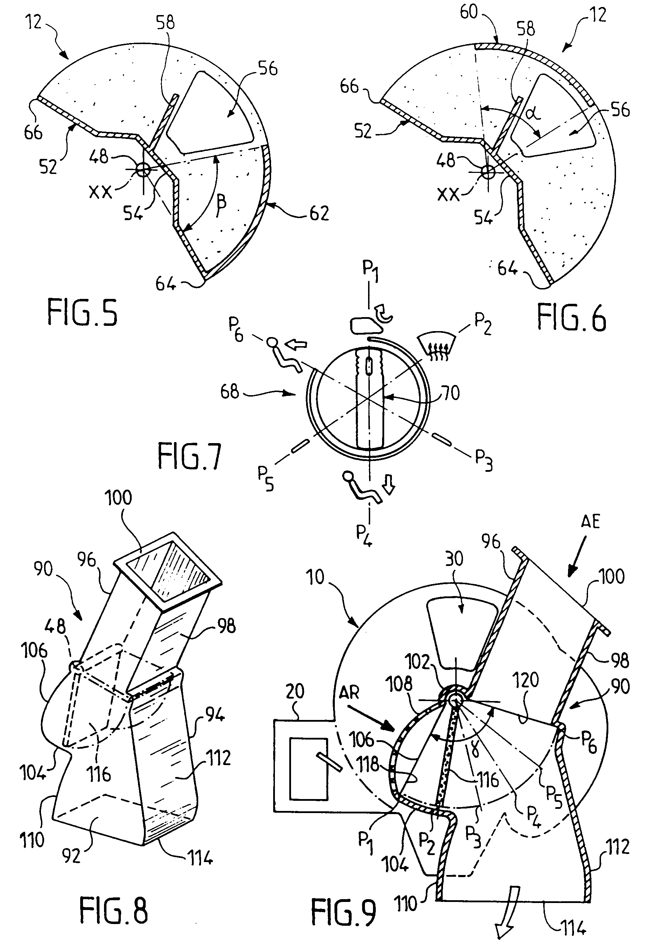

Les deux flans latéraux 46 sont réunis entre eux par une cloison de répartition 52 qui s'étend dans une direction sensiblement diamétrale et qui présente une partie centrale en retrait 54 de l'axe XX (figures 5 et 6) pour contourner le radiateur 44 lorsque le volet 12 est installé dans le boîtier 10. Le volet 12 peut ainsi pivoter à l'intérieur du boîtier avec un développement qui est d'environ 90°.

Chacun des flans 46 comporte une ouverture 56 propre à contrôler sélectivement la sortie d'air 30 du flasque d'extrémité correspondant 16 en fonction de la position angulaire du volet 12. Chacune des ouvertures 56 a sensiblement le même contour que chacune des sorties d'air 30, si bien qu'il existe une position du volet dans laquelle les deux sorties d'air 30 sont complètement ouvertes.

A la cloison de répartition 52 est reliée une cloison d'équilibrage 58 qui s'étend dans une direction sensiblement radiale à partir de l'axe XX mais qui possède une largeur inférieure au rayon des flans latéraux 46. La cloison 58 a une forme générale rectangulaire et s'étend tout le long de l'axe XX.

Le volet 12 comprend en outre une cloison cylindrique circulaire centrale 60 qui est de révolution par rapport à l'axe XX et qui s'étend sur un angle α (figure 6) de l'ordre de 60°. Cette cloison 60 est placée dans une région intermédiaire de l'étendue angulaire du volet 12 et elle peut contrôler sélectivement l'ouverture de sortie 22 en fonction de la position du volet.

De part et d'autre de la cloison cylindrique centrale sont en outre prévues, de façon symétrique, deux cloisons cylindriques circulaires latérales 62 de même rayon et s'étendant sur un angle β limité, par exemple de l'ordre de 60° (figure 5).

Les deux cloisons 62 s'étendent à partir d'une extrémité 64 de la cloison de répartition 52 jusqu'au voisinage de l'ouverture 56. L'autre extrémité de la cloison de répartition est référencée en 66 (figures 3, 5 et 6).

Le volet de répartition 12 peut ainsi pivoter à l'intérieur du boîtier pour contrôler sélectivement la sortie d'air centrale 22, les deux sorties d'air latérales 24 et les deux sorties d'air d'extrémité.

On se réfère maintenant à la figure 7 qui représente un organe de commande 68 comportant un bouton rotatif 70 susceptible d'être mis en regard de plusieurs symboles correspondant respectivement à six positions différentes P1, P2, P3, P4, P5 et P6 qui seront expliquées plus loin.

Le pulseur d'air 80 (figure 1) comprend une enveloppe 82 en forme de volute avec deux entrées d'air opposées 84 (dont une seule est visible sur la figure 1) propres à être reliées respectivement aux deux boîtiers d'alimentation 90 par l'intermédiaire de deux conduites (non représentées), comme schématisé par les flèches AM.

L'enveloppe 82 comporte une sortie d'air 86 qui est raccordée à l'entrée d'air 20 du boîtier 10 par l'intermédiaire d'un conduit 88 de forme évasée. Dans l'exemple, un évaporateur (non représenté) faisant partie d'un circuit classique de climatisation est logé entre le pulseur 80 et le boîtier de chauffage-distribution 10 pour permettre d'admettre de l'air climatisé dans ce boîtier.

On se réfère maintenant aux figures 1, 8 et 9 pour décrire plus particulièrement la structure des boîtiers d'alimentation 90.

Chacun des boîtiers 90 est délimité par deux flasques parallèles 92 et 94 qui s'étendent perpendiculairement à l'axe XX. Chaque boîtier 90 est en outre délimité par des parois à génératrices parallèles à l'axe XX.

Lesdites parois comprennent des parois 96 et 98 délimitant une entrée 100 pour de l'air extérieur AE provenant de l'extérieur de l'habitacle. Une paroi 102 contournant l'arbre 48 et une paroi 104 centrée sur l'axe XX délimitent une entrée 106 pour de l'air recirculé AR provenant de l'intérieur de l'habitacle. Cette entrée d'air 106 est munie d'une gille 108. Les deux entrées 100 et 106 ont des directions respectives formant entre elles un angle légèrement supérieur à 90°.

Par ailleurs, deux parois 110 et 112 délimitent une sortie 114 pour de l'air mélangé destiné à être envoyé vers une entrée 84 du boîtier 80 comme indiqué par la flèche F1.

Les deux entrées d'air 100 et 106 ainsi que la sortie d'air 114 se trouvent dans des directions sensiblement radiales par rapport à l'axe XX.

A l'intérieur de chaque boîtier 90 est prévu un volet de mélange 116 qui est calé sur l'arbre 48 du volet de répartition 12, si bien que ces deux volets peuvent pivoter en synchronisme avec le volet de répartition (figure 3).

Le volet de mélange 116 a une forme générale rectangulaire et s'étend en drapeau à partir de l'axe XX.

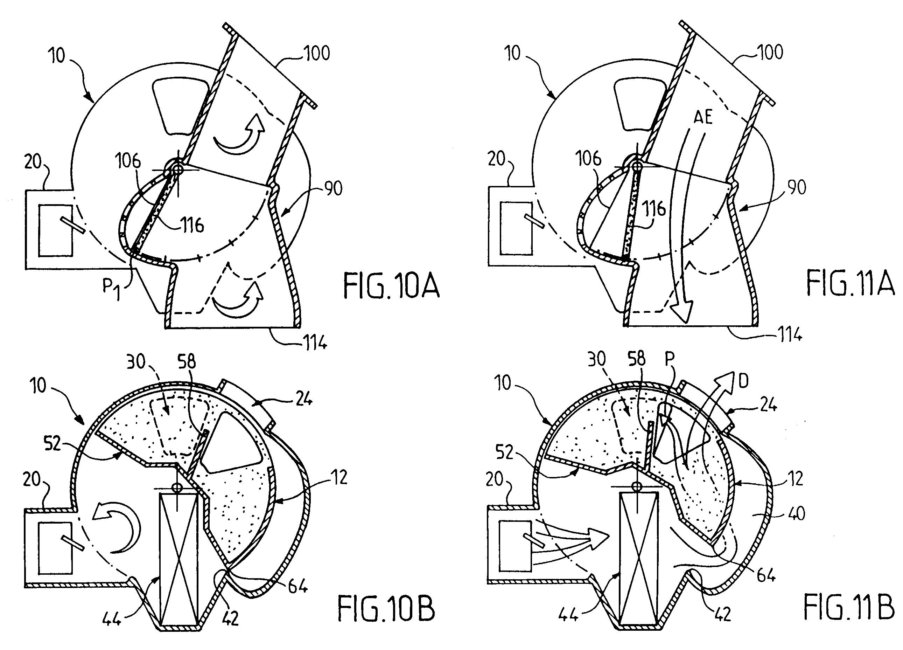

Il peut pivoter à l'intérieur du boîtier 90 sur un intervalle angulaire γ (figure 9) qui est légèrement supérieur à 90° et qui correspond sensiblement à l'angle formé par les directions respectives des entrées d'air 100 et 106.

Le volet 116 est propre à pivoter entre une première position extrême P1 dans laquelle il obture l'entrée d'air recirculé 106 de façon étanche en venant s'appliquer contre un bec 118 et une seconde position extrême P6 dans laquelle il vient obturer l'entrée d'air extérieur 100 de façon étanche en venant s'appliquer contre un bec 120 à contour rectangulaire.

Sinon, l'étanchéité entre le volet 116 et le boîtier 90 est sommaire, mais sans frottement.

Le volet 116 peut prendre quatre positions intermédiaires P2, P3, P4 et P5 (figure 9) qui correspondent à des positions intermédiaires du volet de répartition 12.

Le volet 116 permet de régler la proportion du mélange entre l'air extérieur AE et l'air recirculé AR. Le passage de l'air extérieur AE par rapport à l'air recirculé AR est proportionnel au débattement angulaire du volet dans le sens du déplacement de la position P1 à la position P6.

Lorsque le volet 116 pivote de la position P1 à la position P2, le volet de mélange obture encore l'entrée d'air recirculé 106 mais de façon imparfaite. En effet, dans la position P2, le bord extérieur du volet 116 vient frotter, de façon non étanche, avec la paroi 104. Ensuite, à mesure que le volet 116 se déplace de la position P2 à la position P6, la proportion d'air recirculé par rapport à l'air extérieur augmente progressivement.

Dans l'exemple, le dispositif comprend un circuit d'air climatisé avec une commande séparée et indépendante de la commande 68.

Toutefois, il est prévu que, lorsque l'organe de commande 68 est dans la position de blocage P1, la commande de l'air climatisé est inhibée.

Dans les autres positions P2 à P6, la commande de l'air climatisé est possible.

On décrira maintenant le fonctionnement du dispositif dans chacune des positions P1 à P6, en référence aux figures 10A et 10B à 15A et 15B.

Dans la position P1, dite "position de blocage" (figures 10A et 10B), le volet de mélange 116 de chaque boîtier d'alimentation 90 obture l'entrée 106 de l'air recirculé AR. Ainsi, seul de l'air extérieur AE peut pénétrer dans le boîtier 90.

Mais, dans la position P1, l'extrémité 64 de la cloison de répartition 52 (figure 10B) est en contact étanche avec le bec 42 situé de l'autre côté du radiateur 44 par rapport à l'entrée d'air 20. Les sorties d'air 22, 24 et 30 sont obturées, le dispositif n'assurant ainsi aucune distribution d'air dans l'habitacle. Le flux d'air pénétrant par l'entrée 20 du boîtier 10 reste confiné dans celui-ci, comme indiqué par la flèche.

Dans la position P1, l'habitacle est ainsi isolé et ne reçoit pas d'air et, en outre, la consigne "air climatisé" est inhibée.

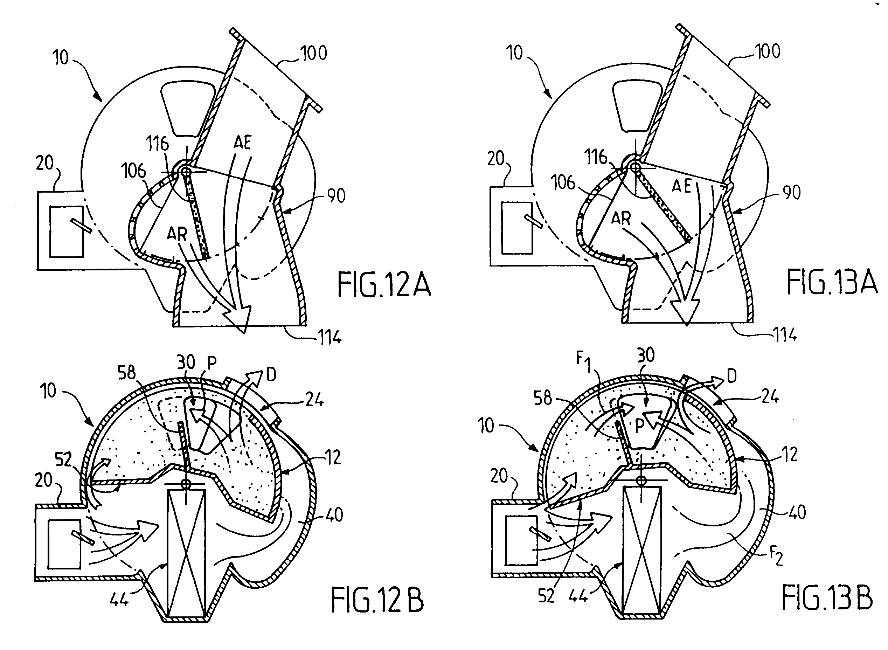

Dans la position P2, dite "position de dégivrage", le volet de mélange 116 (figure 11A) obture l'entrée d'air recirculé 116, si bien que le boîtier 90 est alimenté uniquement par de l'air extérieur.

Dans la position P2, le volet 12 du boîtier de chauffage-distribution 10 (figure 11B) a pivoté légèrement par rapport à la position P1, si bien que l'extrémité 64 de la cloison 52 se trouve à distance du bec 42. Le flux d'air pénétrant dans le boîtier est obligé de traverser le radiateur 44 pour gagner ensuite la chambre de chauffage 40. L'air chaud provenant de la chambre 40 gagne ensuite les sorties d'air latérales qui peuvent être plus ou moins découvertes en fonction de la position angulaire du volet. Une légère fuite d'air chaud peut se produire au travers des sorties d'air d'extrémité 30 pour envoyer de l'air chaud au conduit pieds P.

Dans la position P3 dite "position dégivrage-pieds" (figures 12A et 12B), le volet 116 (figure 12A) règle le mélange entre l'air recirculé AR et l'air extérieur AE avec une proportion choisie, dans laquelle l'air extérieur est prédominant.

Dans la position P3, le volet 12 (figure 12B) a pivoté davantage par rapport à la position précédente, si bien que les sorties d'air latérales 24 et les sorties d'air d'extrémité 30 sont plus ou moins découvertes.

Comme dans la position précédente, la cloison de répartition 52 empêche la création d'un flux d'air froid propre à se mélanger au flux d'air chaud. Cette cloison de répartition 52 est dans une position telle que le flux d'air pénétrant dans le boîtier 10 se divise entre un premier flux F1 (flux froid) qui gagne directement les sorties d'air 30 et un second flux F2 (flux chaud) plus important qui gagne également les sorties d'air 30 en passant au travers du radiateur 44. Il en résulte que l'on produit un air à température réglable en modifiant la position du volet 12.

Dans la position P4 dite "position pieds" (figures 13A et 13B), le volet 116 a pivoté davantage à l'intérieur du boîtier 90 (figure 13A). Il en résulte que la proportion d'air extérieur et la proportion d'air recirculé sont sensiblement identiques.

Dans la position P4, le volet 12 a pivoté un peu plus à l'intérieur du boîtier 10 (figure 13B), si bien que les sorties d'air d'extrémité 30 sont découvertes, tandis que les sorties d'air latérales 24 de dégivrage sont en cours de fermeture (courant de fuite).

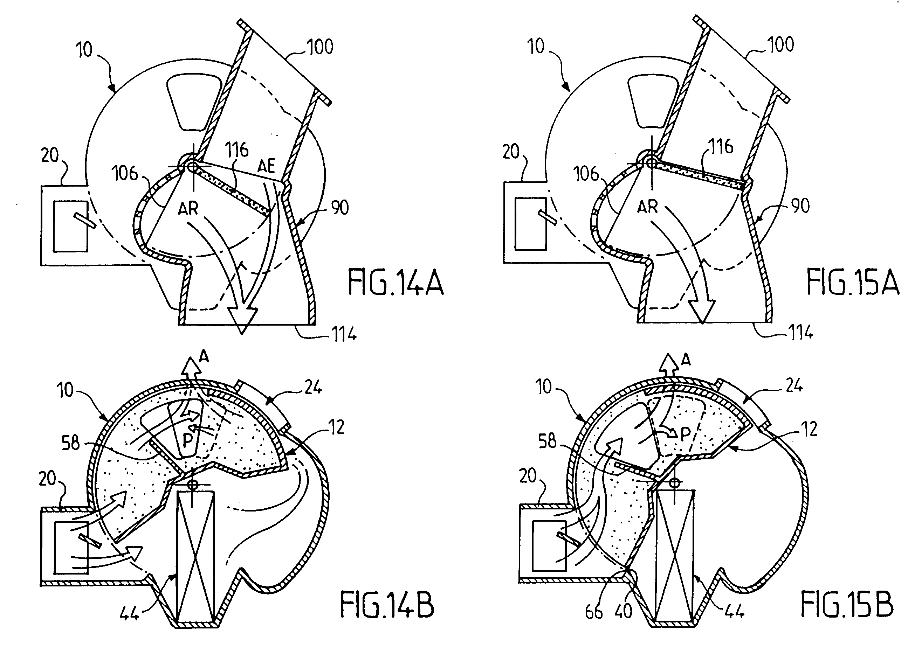

Dans la position P5 dite "position aération-pieds" (figures 14A et 14B), la proportion d'air extérieur AE a diminué dans le mélange.

Dans cette même position, le volet de répartition 12 a pivoté davantage à l'intérieur du boîtier 10 (figure 14B), si bien que la sortie d'air centrale 22 est au moins en partie ouverte, de même que les sorties d'air d'extrémité 30. Comme dans la position précédente, le flux d'air se divise entre un flux F1 qui gagne directement les sorties d'air et un flux F2 qui gagne les mêmes sorties d'air après avoir traversé le radiateur. Là encore, on produit un air à température réglable en ajustant la position angulaire du volet 12.

Dans la position P6 dite "position aération" (figures 15A et 15B), le volet 116 obture complètement l'entrée 100 de l'air extérieur AE. Il en résulte que le boîtier 90 est alimenté uniquement par de l'air recirculé AR.

Dans cette même position, le volet de répartition 12 occupe une autre position extrême à l'intérieur du boîtier 10 (figure 15B). Dans cette position extrême, l'extrémité 66 de la cloison de répartition 52 vient en contact étanche avec le bec 40 situé entre l'entrée d'air 20 et le radiateur 44, si bien que tout le flux d'air passe directement vers la sortie d'air centrale 22 qui seule est découverte, sans traverser le radiateur 44.

Un courant de fuite peut être produit au niveau des conduites pieds P. La sortie d'air 22 reçoit donc uniquement de l'air froid n'ayant pas traversé le radiateur 44.

On remarquera que la cloison d'équilibrage 58 sert essentiellement dans les positions P3, P4 et P5 pour éviter que le flux froid F1 empêche le flux chaud F2 de circuler, ce qui permet ainsi d'équilibrer la perte de charge entre le circuit chaud et le circuit froid.

Dans le dispositif de l'invention, une étanchéité totale est assurée entre le volet 12 et le boîtier 10, d'une part, et de même entre le volet 116 et le boîtier 90, d'autre part, seulement dans les positions extrêmes P1 et P6.

De façon avantageuse, la commande de la position angulaire des volets 12 et 116, synchronisés entre eux, actionne également la vitesse du groupe motoventilateur (non représenté) faisant partie du pulseur 80.

On utilise avantageusement un groupe motoventilateur à quatre positions : 0 (vitesse nulle), 1 (vitesse faible), 2 (vitesse moyenne) et 3 (vitesse élevée).

Dans les positions P1 à P6, le groupe motoventilateur prend avantageusement les vitesses respectives suivantes : 0 3 2 1 2 et 3.

Le fonctionnement du dispositif de l'invention est résumé dans le tableau synoptique suivant :

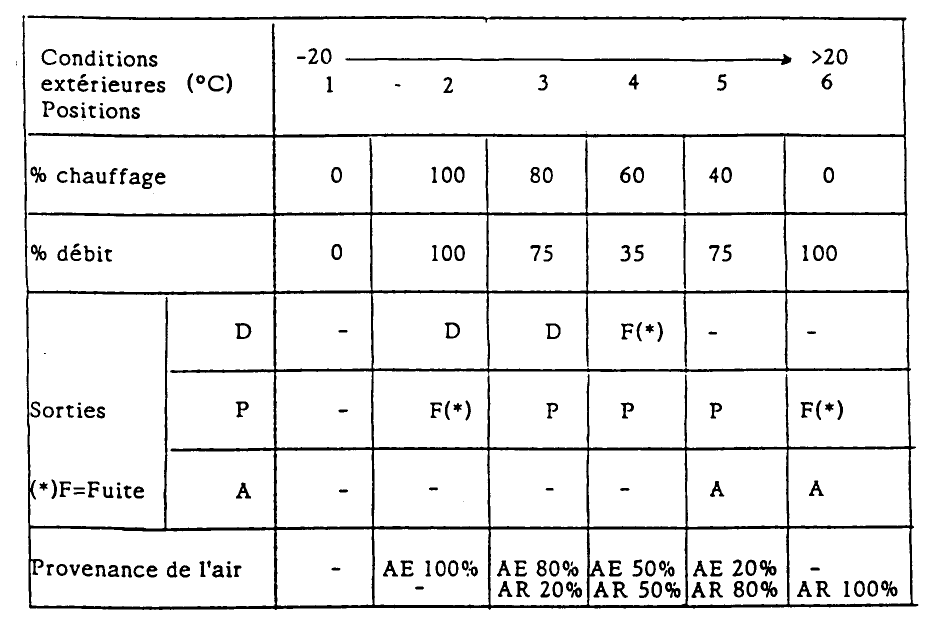

Il est à observer que les positions P1, P2 et P6 n'ont pas d'effet particulier sur la provenance de l'air. Dans la position P1, aucun air n'est admis. Dans la position P2, le dispositif reçoit de l'air extérieur AE à 100% et dans la position P6 de l'air recirculé AR à 100%.

Dans les positions intermédiaires P3, P4 et P5, le dosage entre l'air extérieur AE et l'air recirculé AR permet d'améliorer la qualité de réglage de la température de l'air soufflé par une plus grande rapidité de mise en action du mode chaud (positions P3 et P4) et du mode demi-saison (position P5). Le risque d'embuage est évité par l'utilisation de l'air climatisé dans les positions P2, P3, P4, P5 et P6, dont la commande est inhibée uniquement dans la position P1.

L'invention n'est pas limitée à la forme de réalisation décrite précédemment à titre d'exemple et s'étend à d'autres variantes. Dans tous les cas, le dispositif de l'invention est particulièrement compact et simple et convient tout particulièrement à des véhicules de petites dimensions.

## Revendications

1. Dispositif de chauffage et/ou d'aération de l'habitacle d'un véhicule, comprenant :
- un boîtier de chauffage-distribution (10) délimité par une paroi périphérique (14) présentant une portion cylindrique circulaire (18) autour d'un axe de révolution (XX),
- une entrée d'air (20) aménagée dans le boîtier de chauffage-distribution (10),
- des sorties d'air (22, 24, 30) aménagées dans le boîtier (10) et formées au moins en partie dans la portion cylindrique circulaire (18),
- un radiateur (44) logé dans le boîtier, et
- un volet de répartition (12) monté pivotant dans le boîtier (10) par rapport à l'axe de révolution (XX), suivant un débattement angulaire limité, et comprenant des cloisons cylindriques circulaires (60, 62) propres à coopérer avec la portion cylindrique circulaire (18) du boîtier pour contrôler sélectivement les sorties d'air en fonction de la position angulaire du volet de répartition (12),
caractérisé en ce qu'il comprend en outre au moins un boîtier d'alimentation (90) disposé à une extrémité axiale du boîtier de chauffage-distribution (10) et comprenant une entrée (100) pour de l'air extérieur (AE) provenant de l'extérieur de l'habitacle, une entrée (106) pour de l'air recirculé (AR) provenant de l'intérieur de l'habitacle, un volet de mélange (116) synchronisé avec le volet de répartition (12) et propre à régler la proportion entre l'air extérieur (AE) et l'air recirculé (AR) admis dans le boîtier d'alimentation (90) pour fournir de l'air mélangé (AM), ainsi qu'une sortie d'air (114) pour cet air mélangé (AM), et en ce que la sortie (114) pour l'air mélangé (AM) du boîtier d'alimentation (90) est reliée à un pulseur d'air (80) alimentant l'entrée d'air (20) du boîtier de chauffage-distribution (10).

2. Dispositif selon la revendication 1, caractérisé en ce que le volet de mélange (116) du boîtier d'alimentation (90) et le volet de répartition (12) du boîtier de chauffage-distribution (10) sont calés sur un arbre commun (48) dans la direction de l'axe de révolution (XX).

3. Dispositif selon l'une des revendications 1 et 2, caractérisé en ce que le boîtier d'alimentation (90) comporte deux flasques latéraux (92, 94) entre lesquels se débat le volet de mélange (116) et en ce que ledit volet de mélange a une forme générale rectangulaire et s'étend en drapeau à partir de son axe de pivotement (XX).

4. Dispositif selon la revendication 3, caractérisé en ce que l'entrée (100) pour l'air extérieur (AE), l'entrée (106) pour l'air recirculé (AR) et la sortie (114) pour l'air mélangé (AM) s'étendent dans des directions radiales par rapport à l'axe de pivotement (XX) du volet de mélange (116).

5. Dispositif selon l'une des revendications 1 à 4, caractérisé en ce que l'entrée (100) pour l'air extérieur (AE) et l'entrée (106) pour l'air recirculé (AR) s'étendent dans des directions faisant entre elles un angle voisin de 90° et en ce que le volet de mélange (116) possède un débattement angulaire (γ) sensiblement de la même valeur.

6. Dispositif selon l'une des revendications 1 à 5, caractérisé en ce que le volet de mélange (116) est propre à pivoter dans le boîtier d'alimentation (90) entre une première position extrême (P1) dans laquelle il obture l'entrée (106) pour l'air recirculé (AM) et une seconde position extrême (P6) dans laquelle il obture l'entrée (100) pour l'air extérieur (AM) et en ce que le volet est propre à prendre des positions intermédiaires choisies (P2, P3, P4, P5) dans chacune desquelles il établit une proportion choisie entre l'air extérieur (AE) et l'air recirculé (AR) admis dans le boîtier d'alimentation (90).

7. Dispositif selon l'une des revendications 1 à 6, dans lequel le volet de répartition (12) est réglable pour prendre les positions suivantes : position de blocage (P1), position de dégivrage (P2), position de dégivrage-pieds (P3), position pieds (P4), position aération-pieds (P5) et position aération (P6),
caractérisé en ce que le volet de mélange (116) du boîtier d'alimentation (90) est propre à prendre les mêmes positions (P1 à P6).

8. Dispositif selon la revendication 7, caractérisé en ce que, à partir de la position de blocage (P1) jusqu'à la position de dégivrage (P2), le volet de mélange (116) obture l'entrée (106) pour l'air recirculé (AR) et en ce que, de la position de dégivrage (P2) à la position d'aération (P6), le volet de mélange (116) assure le mélange entre l'air extérieur (AE) et l'air recirculé (AR) en augmentant progressivement le débit d'air recirculé (AR) au détriment du débit d'air extérieur (AE) jusqu'à obturer l'entrée (100) pour l'air extérieur (AE) dans la position d'aération (P6).

9. Dispositif selon l'une des revendications 1 à 8, caractérisé en ce qu'il comprend une commande unique (68) pour régler la position du volet de répartition (12) du boitier de chauffage-distribution (10) et le volet de mélange (116) du boîtier d'alimentation (90).

10. Dispositif selon l'une des revendications 1 à 9, caractérisé en ce qu'il comprend en outre un circuit d'air climatisé comportant un évaporateur logé entre le pulseur (80) et le boîtier de chauffage-distribution (10).

11. Dispositif selon la revendication 10, caractérisé en ce que le circuit d'air climatisé comprend une commande séparée, indépendante de la commande commune du volet de répartition (12) et du volet de mélange (116), et en ce que la commande du circuit d'air climatisé est inhibée dans la position (P1) où le volet de mélange (116) du boîtier d'alimentation (90) obture l'entrée (106) pour l'air recirculé (AR).

12. Dispositif selon l'une des revendications 1 à 11, caractérisé en ce qu'il comprend deux boîtiers d'alimentation (90) disposés respectivement aux deux extrémités axiales du boîtier de chauffage-distribution (10) et reliés respectivement à deux entrées d'air opposées (84) du pulseur (80).

## Claims

1. A heating and/or ventilating apparatus for the cabin of a vehicle, comprising:
- a heating and distribution manifold (10) defined by a peripheral wall (14) having a cylindrical portion (18) which is circular about an axis of revolution (XX),
- an air inlet (20) formed in the heating and distribution manifold (10),
- air outlets (22, 24, 30) arranged in the manifold (10) and formed at least partly in the circular cylindrical portion (18),
- a radiator (44) mounted within the manifold, and
- a distribution valve (12) mounted for pivoting movement in the manifold (10) with respect to the axis of revolution (XX) through a limited angular displacement, and including circular cylindrical baffles (60, 62) adapted to cooperate with the circular cylindrical portion (18) of the manifold so as to control the air outlets selectively as a function of the angular position of the distribution valve (12),
characterised in that it further includes at least one feed trunk (90), disposed at an axial end of the heating and distribution manifold (10) and including an inlet (100) for fresh air (AE) drawn from outside the cabin, an inlet (106) for recirculated air (AR) drawn from inside the cabin, a mixing valve (116) synchronized with the distribution valve (12) and adapted to regulate the proportion between the fresh air (AE) and the recirculated air (AR) admitted into the feed trunk (90) so as to provide mixed air (AM), together with an air outlet (114) for this mixed air (AM), and in that the outlet (114) of the feed trunk (90), for the mixed air (AM), is connected to an air blower (80) feeding the air inlet (20) of the heating and distribution manifold (10).

2. Apparatus according to Claim 1, characterised in that the mixing valve (116) of the feed trunk (90) and the distribution valve (12) of the heating and distribution manifold (10) are mounted on a common shaft (48), along the axis of revolution, (XX).

3. Apparatus according to Claim 1 or claim 2, characterised in that the feed trunk (90) includes two side walls (92, 94), between which the mixing valve (116) is displaceable, and in that the said mixing valve has a generally rectangular form and extends from its pivot axis (XX) like a curtain.

4. Apparatus according to Claim 3, characterised in that the inlet (100) for fresh air (AE), the inlet (106) for recirculated air (AR) and the outlet (114) for mixed air (AM) extend in radial directions with respect to the pivot axis (XX) of the mixing valve (116).

5. Apparatus according to one of Claims 1 to 4, characterised in that the inlet (100) for fresh air (AE) and the inlet (106) for recirculated air (AR) extend in directions defining between them an angle of approximately 90°, and in that the mixing valve (116) has an angular displacement (γ) of substantially the same value.

6. Apparatus according to one of Claims 1 to 5, characterised in that the mixing valve (116) is adapted to pivot in the feed trunk (90) between a first end position (P1) in which it obturates the inlet (106) for recirculated air (AM), and a second end position (P6) in which it obturates the inlet (100) for fresh air (AM), and in that the valve is adapted to assume selected intermediate positions (P2, P3, P4, P5), in each of which it establishes a selected proportion between the fresh air (AE) and the recirculated air (AR) admitted into the feed trunk (90).

7. Apparatus according to one of Claims 1 to 6, in which the distribution valve (12) is adjustable so as to assume the following positions: a blocking position (P1), a deicing position (P2), a deicing and feet position (P3), a feet position (P4), a ventilation and feet position (P5), and a ventilation position (P6), characterised in that the mixing valve (116) of the feed trunk (90) is adapted to adopt the same positions (P1 to P6).

8. Apparatus according to Claim 7, characterised in that, from the blocking position (P1) to the deicing position (P2), the mixing valve (116) obturates the inlet (106) for recirculated air (AR), and in that, from the deicing position (P2) to the ventilation position (P6), the mixing valve (116) provides mixing between the fresh air (AE) and the recirculated air (AR) by progressively increasing the flow of recirculated air (AR) at the expense of the flow of fresh air (AE), until the inlet (100) for fresh air (AE) is obturated in the ventilation position (P6).

9. Apparatus according to one of Claims 1 to 8, characterised in that it includes a single control (68) for adjusting the position of the distribution valve (12) of the heating and distribution manifold (10) and the mixing valve (116) of the feed trunk (90).

10. Apparatus according to one of Claims 1 to 9, characterised in that it further includes an air conditioning circuit including an evaporator mounted between the blower (80) and the heating and distribution manifold (10).

11. Apparatus according to Claim 10, characterised in that the air conditioning circuit includes a separate control, independent of the common control for the distribution valve (12) and mixing valve (116), and in that the control of the air conditioning circuit is inhibited in the position (P1) in which the mixing valve (116) of the feed trunk (90) obturates the inlet (116) for recirculated air (AR).

12. Apparatus according to one of Claims 1 to 11, characterized in that it has two feed trunks (90), disposed respectively at two axial ends of the heating and distribution manifold (10) and connected respectively to two opposed air inlets (84) of the blower (80).

## Patentansprüche

1. Heizungs- und/oder Belüftungsanlage für den Fahrgastraum eines Kraftfahrzeugs, umfassend:
- ein Heizungs-/Verteilergehäuse (10), das durch eine Umfangswand (14) begrenzt wird, die einen kreiszylindrischen Abschnitt (18) um eine Drehachse (XX) aufweist,
- einen Lufteinlaß (20), der in das Heizungs-/Verteilergehäuse (10) eingearbeitet ist,
- Luftauslässe (22, 24, 30), die in das Gehäuse (10) eingearbeitet und zumindest teilweise im kreiszylindrischen Abschnitt (18) ausgebildet sind,
- einen im Gehäuse angeordneten Radiator (44), und
- eine Verteilerklappe (12), die im Gehäuse (10) schwenkbar im Verhältnis zur Drehachse (XX) entlang einer begrenzten winkelauslenkung gelagert ist und kreiszylindrische Trennwände (60, 62) umfaßt, die mit dem kreiszylindrischen Abschnitt (18) des Gehäuses zusammenwirken können, um die Luftauslässe in Abhängigkeit von der Winkelposition der Verteilerklappe (12) wahlweise zu kontrollieren,
**dadurch gekennzeichnet,** daß sie außerdem mindestens ein Zuleitungsgehäuse (90) umfaßt, das an einem axialen Ende des Heizungs-/Verteilergehäuses (10) angeordnet ist und einen Einlaß (100) für außerhalb des Fahrgastraums aufgenommene Außenluft (AE), einen Einlaß (106) für aus dem Innern des Fahrgastraums kommende Umluft (AR), eine mit der Verteilerklappe (12) synchronisierte Mischklappe (116) zur Regelung des Verhältnisses zwischen der in das Zuleitungsgehäuse (90) eingelassenen Außenluft (AE) und Umluft (AR) für die Lieferung von Mischluft (AM) sowie einen Luftauslaß (114) für diese Mischluft (AM) umfaßt, und daß der Auslaß (114) für die Mischluft (AM) des Zuleitungsgehäuses (90) mit einem Luftgebläse (80) für die Luftzuleitung zum Lufteinlaß (20) des Heizungs-/Verteilergehäuses (10) verbunden ist.

2. Anlage nach Anspruch 1 , **dadurch gekennzeichnet,** daß die Mischklappe (116) des Zuleitungsgehäuses (90) und die Verteilerklappe (12) des Heizungs-/Verteilergehäuses (10) auf einer gemeinsamen Welle (48) in Richtung der Drehachse (XX) befestigt sind.

3. Anlagenach einem der Ansprüche 1 und 2 , **dadurch gekennzeichnet,** daß das Zuleitungsgehäuse (90) zwei Seitenteile (92, 94) umfaßt, zwischen denen sich die Mischklappe (116) bewegt, und daß die besagte Mischklappe eine rechteckige Gesamtform hat und sich als Schwenkklappe von ihrer Schwenkachse (XX) aus erstreckt.

4. Anlage nach Anspruch 3 , **dadurch gekennzeichnet,** daß sich der Einlaß (100) für die Außenluft (AE), der Einlaß (106) für die Umluft (AR) und der Auslaß (114) für die Mischluft (AM) in radialen Richtungen im Verhältnis zur Schwenkachse (XX) der Mischklappe (116) erstrecken.

5. Anlage nach einem der Ansprüche 1 bis 4 , **dadurch gekennzeichnet,** daß sich der Einlaß (100) für die Außenluft (AE) und der Einlaß (106) für die Umluft (AR) in Richtungen erstrecken, die untereinander einen Winkel von annähernd 90° bilden, und daß die Mischklappe (116) eine Winkelauslenkung (γ) mit etwa dem gleichen Wert besitzt.

6. Anlage nach einem der Ansprüche 1 bis 5 , **dadurch gekennzeichnet,** daß die Mischklappe (116) im Zuleitungsgehäuse (90) zwischen einer ersten Endposition (P1), in der sie den Einlaß (106) für die Umluft (AM) verschließt, und einer zweiten Endposition (P6) schwenkbar ist, in der sie den Einlaß (100) für die Außenluft (106) verschließt, und daß die Klappe ausgewählte Zwischenpositionen (P2, P3, P4, P5) einnehmen kann, in denen sie jeweils ein ausgewähltes Verhältnis zwischen der in das Zuleitungsgehäuse (90) eingelassenen Außenluft (AE) und Umluft (AR) herstellt.

7. Anlage nach einem der Ansprüche 1 bis 6 , bei der die Verteilerklappe (12) verstellbar ist, um die folgenden Positionen einzunehmen: Ausschaltposition (P1), Position Entfrostung (P2), Position Entfrostung-Fußraum (P3), Position Fußraum (P4), Position Belüftung-Fußraum (P5) und Position Belüftung (P6),
**dadurch gekennzeichnet,** daß die Mischklappe (116) des Zuleitungsgehäuses (90) die gleichen Positionen (P1 bis P6) einnehmen kann.

8. Anlage nach Anspruch 7 , **dadurch gekennzeichnet,** daß die Mischklappe (116) von der Ausschaltposition (P1) bis zur Entfrostungsposition (P2) den Einlaß (116) für die Umluft (AR) verschließt und daß die Mischklappe (116) von der Entfrostungsposition (P2) bis zur Belüftungsposition (P6) die Mischung zwischen der Außenluft (AE) und der Umluft (AR) mit fortschreitender Erhöhung des Umluftdurchsatzes (AR) auf Kosten des Außenluftdurchsatzes (AE) bis zum Verschließen des Einlasses (100) für die Außenluft (AE) in der Belüftungsposition (P6) bewirkt.

9. Anlage nach einem der Ansprüche 1 bis 8 , **dadurch gekennzeichnet,** daß sie ein einziges Bedienelement (68) zur Einstellung der Position der Verteilerklappe (12) des Keizungs-/Verteilergehäuses (10) und der Mischklappe (116) des Zuleitungsgehäuses (90) umfaßt.

10. Anlage nach einem der Ansprüche 1 bis 9 , **dadurch gekennzeichnet**, daß sie einen Klimatisierungskreislauf mit einem Verdampfer umfaßt, der zwischen dem Gebläse (80) und dem Heizungs-/Verteilergehäuse (10) angeordnet ist.

11. Anlage nach Anspruch 10 , **dadurch gekennzeichnet,** daß der Klimatisierungskreislauf eine gesonderte Betätigung umfaßt, die von der gemeinsamen Betätigung der Verteilerklappe (12) und der Mischklappe (116) unabhängig ist, und daß die Betätigung des Klimatisierungskreislaufs in der Position (P1) gesperrt ist, in der die Mischklappe (116) des Zuleitungsgehäuses (90) den Einlaß (106) für die Umluft (AR) verschließt.

12. Anlage nach einem der Ansprüche 1 bis 11 , **dadurch gekennzeichnet**, daß sie zwei Zuleitungsgehäuse (90) umfaßt, die an den zwei axialen Enden des Heizungs-/Verteilergehäuses (10) angeordnet und mit zwei gegenüberliegenden Lufteinlässen (84) des Gebläses (80) verbunden sind.
